# EUROPÄISCHE PATENTSCHRIFT

(11) **EP 1 317 998 B1**
(45) Veröffentlichungstag und Bekanntmachung des Hinweises auf die Patenterteilung: **15.09.2010**
(21) Anmeldenummer: 02015832.5
(22) Anmeldetag: 16.07.2002
(51) Int. Cl.: B25J 17/02, B23P 19/00, B25J 9/16

(54) **Verfahren und Vorrichtung zur Positionierung von Füge- oder Bearbeitungseinheiten**
Method and device for the positioning of assembing or working units
Procédé et dispositif de positionnement d'unités d'assemblage ou de travail

(30) Priorität: 04.12.2001 DE 10159482
(43) Veröffentlichungstag der Anmeldung: 11.06.2003
(73) Patentinhaber: ROBERT BOSCH GMBH, 70442 Stuttgart (DE)
(72) Erfinder: Lahni, Wolfgang, 73614 Schorndorf (DE); Kaesser, Rainer, 71566 Althuette (DE); Dieterle, Martin, 71636 Ludwigsburg (DE); Noller, Thomas, 71540 Murrhardt (DE)

(56) Entgegenhaltungen:
- DE-A- 19 849 720
- DE-C- 19 830 386
- US-A- 4 884 941

## Beschreibung

### Stand der Technik

Die Erfindung betrifft eine Vorrichtung und ein Verfahren zur Positionierung von Füge- oder Bearbeitungseinheiten für Bauteile, beispielsweise für Greifarme von Handhabungsautomaten oder sogenannten Fertigungsrobotern, nach der Gattung der Vorrichtungs- oder Verfahrensansprüche.

Es ist beispielsweise aus der DE 198 30 386 C1 bekannt, dass zur Positionierung solcher Bearbeitungseinheiten Vibrationsvorrichtungen zur Unterstützung der genauen Positionierung herangezogen werden, wobei diese Vibrationsvorrichtung für sich gesehen z.B. auch aus dem Fachaufsatz "Assembly of Prismatic Parts Using a Pneumatic Vibratory Wrist", Technical Paper MS90-820 , Society of Manufacturing Engineers, Dearborn USA, 1990, bekannt sind.

Bei der Anordnung aus der zuerst genannten DE-Druckschrift sind eine erste und eine zweite Vibrationsvorrichtung jeweils rechtwinklig zueinander in x- und y-Richtung und gemeinsam quer zur Wirkrichtung in z-Richtung der Bearbeitungseinheit angeordnet und an einer Basiseinheit gelagert.

Bei der bekannten Anordnung werden zur Feinpositionierung entlang der Wirkrichtung z hautsächlich Druckfedern angeordnet, mit denen beispielsweise die Fügekraft bei einem Fügevorgang einstellbar ist. Obwohl bei der bekannten Anordnung für sich gesehen schon vorgeschlagen wurde, anstelle der Druckfedern auch Tauchankermagnete zur Optimierung des Fügevorgangs vorzusehen, ergibt sich durch die Drehbewegung der Drehvorrichtung hier aber immer noch eventuell ein Achsenversatz, der größer sein kann als ein an sich notwendiges Fügespiel beim Fügevorgang. Beispielsweise sind bei einer Anwendung der Vorrichtung zum Fügen von Kolben in die Zylinderbohrungen von Einspritzpumpen für Kraftfahrzeuge Fügespiele von 1µm zu berücksichtigen.

Ferner ist aus der DE 198 49 720 A eine Vorrichtung zur präzisen Handhabung und Montage von Bauteilen bekannt, die einen Präzisionsantrieb mit einem in z-Richtung steuerbaren Feinantrieb aufweist. Der Feinantrieb ist mit einem Kraftsensor versehen, dessen Kraftsignal zur Positionierung eines Sauggreifers in z-Richtung den Feinantrieb steuert.

### Vorteile der Erfindung

Eine Vorrichtung zur Positionierung von Füge- oder Bearbeitungseinheiten für Werkstücke weist gattungsgemäß rechtwinklig zueinander angeordnete Vibrationsvorrichtungen zur Positionierung der Bearbeitungseinheit in der x-und y-Richtung auf und ist weiterhin mit einem Magnetsystem zur Positionierung der Bearbeitungseinheit entlang der Wirk- oder z-Richtung versehen.

Die Führung der Bearbeitungseinheit in z-Richtung erfolgt mit einem Linearlager.

In vorteilhafter Weise ist gemäß der Erfindung eine Regelvorrichtung für den Antrieb des Magnetsystems vorhanden, mit dem die Positionierung der Bearbeitungseinheit in Wirk- oder z-Richtung derart durchführbar ist, dass ein Kraftgeregelter Fügevorgang der Bearbeitungseinheit erfolgt.

Gemäß der Erfindung ist als Bestandteil der Regelvorrichtung ein Kraftsensor zur Messung der in Wirk- oder z-Richtung wirkenden Kraft zwischen den in z-Richtung gegenüberliegenden Oberflächen des Kraftsensors vorhanden, wobei die eine Seite des Kraftsensors mit dem Magnetsystem und die andere Seite mit der Bearbeitungseinheit gekoppelt ist. Außerdem ist ein Wegsensor zur Messung des von der Bearbeitungseinheit in Wirk- oder z-Richtung im Verhältnis zur Basiseinheit zurückgelegten Weges angebracht.

Es ist somit erfindungsgemäß ein definiertes Bearbeiten, bzw. Fügen eines Bauteils ermöglicht, bei dem nur die für den Bearbeitungs- oder Fügevorgang erforderliche Kraft auftritt.

Ferner kann auf einfache Weise zwischen der Krafteinleitung vom Magnetsystem und dem Kraftsensor eine mit einer vorgebbaren Vorspannung beaufschlagbare Federanordnung angebracht werden. Zwischen der Federanordnung und dem Kraftsensor kann darüber hinaus noch ein kraftabsorbierendes Zwischenstück angeordnet werden. Somit ist ein Schutz des Kraftsensors dadurch erreicht, dass entsprechend der Auslegung der Federanordnung, z.B. ein Tellerfederpaket, die Kraft hiermit und gegebenenfalls mit dem weiteren Zwischenstück weitgehend aufgenommen wird.

Bei einer vorteilhaften Ausführung eines erfindungsgemäßen Verfahrens zum Betrieb einer der zuvor genannten Vorrichtungen wird in einem ersten Arbeitsgang die Bearbeitungseinheit in der x-y-Ebene in einem vorgegebenen Abstand über dem Bearbeitungsort positioniert. Mittels der Sensorsignale des Weg- und des Kraftsensors wird die Regelvorrichtung das Magnetsystem für den Antrieb in der z-Richtung so ansteuern, dass das Gewicht der Bearbeitungseinheit kompensiert wird.

In einem zweiten Arbeitsgang des Verfahrens kann, gesteuert durch die Signale des Wegsensors, in der z-Richtung ein Aufsetzen der Bearbeitungseinheit auf dem zu bearbeitenden Werkstück durchgeführt werden und in einem dritten Arbeitsgang kann mit den Vibrationsvorrichtungen in der x- und in der y-Richtung ein Such- und Bearbeitungsvorgang am Werkstück vorgenommen werden.

Der Suchvorgang zum Auffinden einer Ausnehmung, z.B. eine Zylinderbohrung für einen Kolben einer Pumpe am zu bearbeitenden Werkstück, kann dann in einer an sich aus dem Stand der Technik bekannten Weise mittels der Vibrationsvorrichtungen vorgenommen werden, wobei gemäß der Erfindung in vorteilhafter Weise eine Auswertung des Signals des Wegsensors herangezogen wird.

Der Bearbeitungsvorgang kann, wie zuvor erwähnt, aus dem Fügen eines Bauteils in eine gefundene Ausnehmung bestehen, wobei dann die Regelung der Fügekräfte und des Fügewegs in z-Richtung mittels des mit der Regelvorrichtung geregelten Magnetsystems unter Auswertung der Signale des Weg- und des Kraftsensensors erfolgt. Für den Fall, dass zu hohe Füge- oder Bearbeitungskräfte am Bauteil auftreten, kann darüber hinaus die Bearbeitungseinheit zunächst vom Werkstück in z-Richtung wieder wegbewegt werden um den Bearbeitungsvorgang zu wiederholen. Es ist auch möglich, dass mittels der Vibrationsvorrichtungen nochmals eine oszillierende Schwingung in der x-,y-Ebene erzeugt wird um den Bearbeitungsvorgang zu Ende zu führen.

Die Vibrationseinrichtungen in der Bearbeitungseinheit können beispielsweise aus Umkehrmagnetsystem wirkungsvoll aufgebaut werden, da hier die oszillierenden Schwingungen jeweils mit Magnetpaaren erzeugt werden, die mit untereinander antivalenten Sollwerten beaufschlagt werden, d.h. dem jeweils anderen Magneten wird das gleiche Signal mit umgekehrtem Vorzeichen zugeordnet. Die Signale bestehen aus definierten sich wiederholenden Elementen verschiedener Frequenzen, wobei Sinussignale Dreiecksignale oder auch versetzte Sinussignale verwendet werden können. Die Sollwerte korrelieren dann mit der Position an der sich die Bearbeitungseinheit befindet, wobei eine hohe Aufenthaltswahrscheinlichkeit für die Anordnung des zu fügenden Bauteils in der Mitte des Schwingungsbereichs bzw. im inneren Bereich der überstrichenen Fläche für die Fügung gegeben ist.

Mit der erfindungsgemäßen Vorrichtung und dem erfindungsgemäßen Verfahren ist es somit auf einfache Weise möglich, mit einem Handhabungsautomaten oder Fertigungsroboter eine genau regelbare Greifeinrichtung bzw. Greifarme für ein zu fügendes Bauteil zu realisieren, die alle für eine genaue Fügung benötigten Eigenschaften besitzen, da mit der Einbeziehung einer Kraft- und Wegmessung die menschliche Hand hinsichtlich der mechanischen Positioniergenauigkeit und Positionierqualität relativ gut nachgebildet werden kann.

### Zeichnung

Ein Ausführungsbeispiel der erfindungsgemäßen Vorrichtung für eine Greifeinheit eines Handhabungsautomaten wird anhand der Zeichnung erläutert. Es zeigen:
Figur 1 ein schematische Darstellung eines solchen Handhabungsautomaten mit der Greifeinheit und
Figur 2 einen detaillierteren Schnitt durch die Greifeinheit.

### Beschreibung des Ausführungsbeispiels

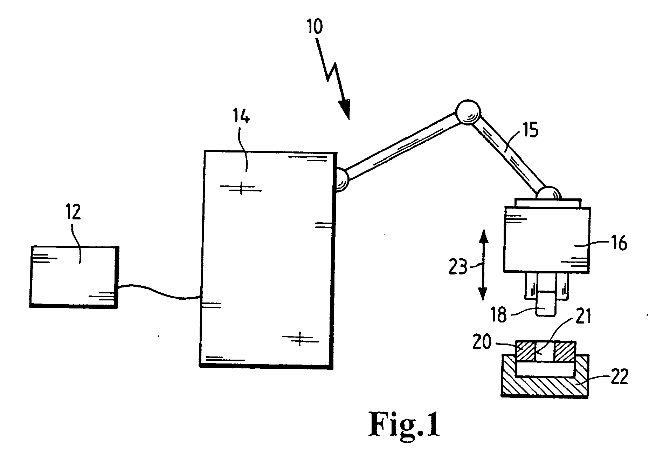

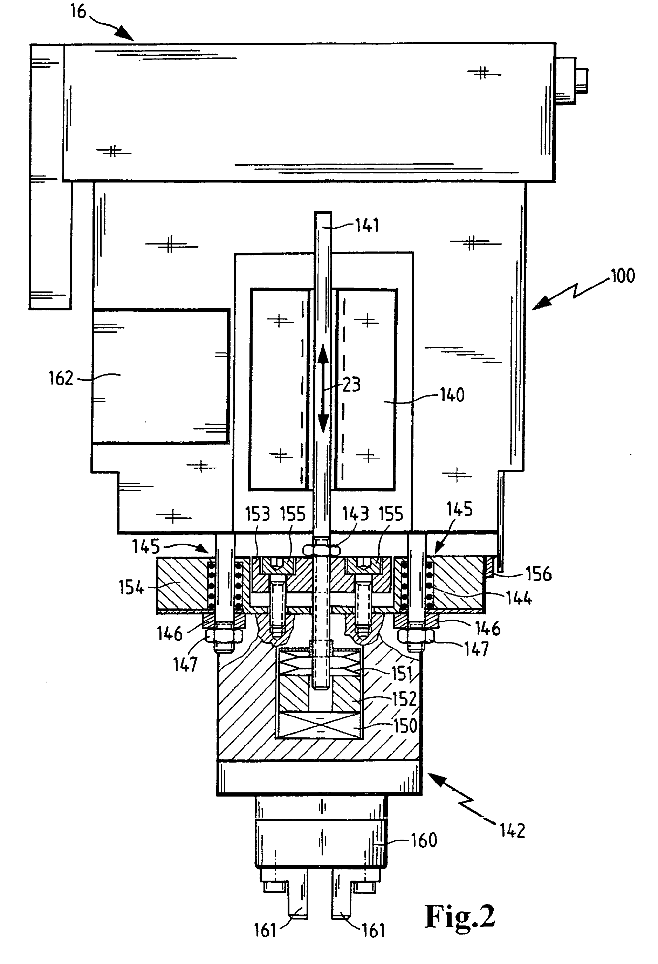

In Figur 1 ist ein Handhabungsautomat 10 gezeigt, wie er an sich aus dem eingangs genannten Stand der Technik DE 198 30 386 C1 bekannt ist. Es ist hier eine Steuerung 12 vorhanden, mit der eine Positioniervorrichtung 14 gesteuert werden kann. An einem Arm 15 der Positioniervorrichtung 14 ist eine weitere Vorrichtung 16 angebracht, die zum Positionieren und zum Fügen, Trennen oder sonstigen Bearbeitungsvorgängen mit einem Bauteil 18 geeignet ist. Die Vorrichtung 16 wird anhand ihrer erfindungsgemäßen Ausgestaltung im Detail anhand Figur 2 erläutert.

Aus der Figur 1 ist noch zu entnehmen, dass mit der Vorrichtung 16 beispielsweise ein Kolben 18 als zu fügendes Bauteil in einen Zylinder 20 eingebracht werden soll. Hierfür ist im Zylinder 20 einen Bohrung 21 vorhanden, in die der Kolben 18 mit der Vorrichtung 16 eingefügt werden soll; der Zylinder 20 ist dazu in eine Werkstückaufnahme 22 eingespannt. Die Vorrichtung 16 kann insbesondere zum Feinpositionieren und zum Fügen oder Trennen des Bauteils 18 mit der Bohrung 21 in der Wirkrichtung 23 oder für ein Handling anderer entsprechender Bauteile, wie z.B. Wellen oder Zahnräder, angewandt werden, wobei diese Vorgänge in der x-y-Ebene senkrecht zur Wirkrichtung 23 mit einer, aus dem eingangs genannten Stand der Technik bekannten, Vibrationsunterstützung erfolgt.

Die detaillierte Darstellung der Vorrichtung 16 nach der Figur 2 zeigt ein an einer Basiseinheit 100 angebrachtes Magnetsystem 140, insbesondere ein sog. Umkehrmagnetsystem, mit dem eine Antriebsache 141 in z-Richtung, also in der Wirkrichtung 23 steuerbar ist. Unterhalb des Magnetsystems 140 ist eine Bearbeitungseinheit 142 angeordnet, welche mit der Antriebsachse 141 mittels einer Schraubverbindung, hier insbesondere eine Mutter 143, verbunden ist. Damit dieses in der Wirkrichtung 23 zu bewegende System mit der Bearbeitungseinheit 142 mechanisch steif ist, ist ein Linearlager 144 mit vier Führungssäulen in entsprechenden Linearkugelführungen 145 zur Gleitführung angebracht. Am unteren Ende der Linearsäulen sind Dämpfer 146 angebracht, die mit Muttern 147 gehalten sind.

Im Inneren der Bearbeitungseinheit 142 ist ein Kraftsensor 150 an einer in Wirkrichtung liegenden Seite fest angeordnet, der die über die Antriebsachse 141 eingeleitete Kraft mit Hilfe einer Federanordnung 151, hier ein Tellerfederpaket, und einem Zwischenstück 152 aufnimmt. Durch die Anordnung mit der Federanordnung 151 und dem Zwischenstück 152 kann der Kraftsensor 150 derart geschützt werden, dass bei einer zu hoch auftretenden Kraft eine Anschlagplatte 153 auf einen Block 154 auftrifft und dann kann der Kraftsensor 150 nur mit einer Kraft entsprechend der Auslegung der Federanordnung 151 belastet werden.

Mit Schrauben 155_kann die Federanordnung 151 so vorgespannt werden, dass beispielsweise ein Kraftsensor 150 mit interschiedlichen Messbereichen verwendet werden kann. Weiterhin ist mit den Dämpfern 146 gewährleistet, dass bei schnellen Schlägen nach unten der Kraftsensor 150 keine Krafteinwirkung erfährt, die ihn zerstören kann.

Mit der Auswertung des Messsignals des Kraftsensors 150 kann erreicht werden, dass ein in der Wirkrichtung 23 ausgeführter Bearbeitungsvorgang, insbesondere ein Fügevorgang, so geregelt wird, dass nur die für den Fügevorgang erforderliche und notwendige Kraft an der Bearbeitungseinheit 142 in der Wirkrichtung 23 auftritt. Um eine Kompensation des Eigengewichts der Bearbeitungseinheit 142 zu erreichen ist ein Wegsensor 156 angeordnet, der mit seinen Messelementen den Weg der Bearbeitungseinheit 142 relativ zum Magnetsystem 140 in der Wirkrichtung 23 erfasst.

Um mit einer Greifvorrichtung ein zwischen Greifelementen 161 gehaltenes, hier nicht dargestelltes, Bauteil in ein zu bearbeitenden Werkstück einzufügen, wird zunächst die Greifvorrichtung 160 z.B. über eine Bohrung zur Aufnahme des Bauteils positioniert. Bevor es zum Aufsetzen des Bauteils kommt, wird die Antriebsachse 141 durch das Magnetsystem 140 unter Auswertung der Signale des Kraftsensors 150 und des Wegsensors 156 in der Wirkrichtung so mit einer Kraft beaufschlagt, dass die Bearbeitungseinheit 142 in einen gewichtskompensierten Zustand gebracht wird. In diesem Zustand wird die Gewichtskraft der in Wirkrichtung 23(z-Richtung) zu bewegenden Bearbeitungseinheit 142 vom Kraftsensor 150 aufgenommen, d.h. die Gewichtskraft wird durch Bestandteile einer Regelvorrichtung in der Steuerung 12 nach der Figur 1 so kompensiert, dass nach außen keine Kraft auftritt.

Anschließend kann die Bearbeitungseinheit 142 auf das zu bearbeitende Werkstück dadurch aufgesetzt werden, dass durch den Wegsensor 156 der Weg erfasst wird und dadurch ein Abstoppen der Bewegung in Wirkrichtung erfolgt.

Wenn dieser Zustand erreicht ist, können die aus dem Stand der Technik bekannten Vibrationsvorrichtungen, von denen hier nur eine mit der Bezugsziffer 162 symbolisch angedeutet ist, mit oszillierenden Schwingungen beaufschlagt werden, um ein Auffinden der Bohrung 21 (vgl. Figur 1) für das einzufügende Bauteil 18 zu ermöglichen. Das Auffinden der Bohrung 21 kann hier mit dem Wegsensor 156 erkannt werden, da das Bauteil 18 dann einen Weg in der Wirkrichtung 23 zurücklegt.

Die eigentliche Fügung des Bauteils 18 kann nun mit dem Magnetsystem 140 und der in z- oder Wirkrichtung 23 angetriebenen Antriebsache 141 realisiert werden. Mit Hilfe des Kraftsensors 150 kann die Fügekraft genau bestimmt und so ausgeregelt werden, dass nur die erlaubten Fügekräfte auftreten. Gegebenenfalls kann auch noch mit der zweiten Spule im als Umkehrmagnetsystem aufgebauten Magnetsystem 140 eine zusätzliche Kraft aufgebracht werden, wenn die Fügekraft nicht ausreichend sein sollte. Das Ende des Fügeprozesses ist dann mit dem Wegsensor 156 wiederum anhand des zurückgelegten Weges der Bearbeitungseinheit 142 messbar und kann zur Erzeugung der notwendigen Steuersignale herangezogen werden.

## Patentansprüche

1. Vorrichtung zur Positionierung von Füge- oder Bearbeitungseinheiten (142) für Bauteile (18), mit
- rechtwinklig zueinander angeordneten Vibrationsvorrichtungen (162) zur Positionierung der Bearbeitungseinheit in der x- und y-Richtung und mit einem Magnetsystem (140) zur Positionierung der Bearbeitungseinheit entlang einem an einer Basiseinheit (100) gehaltenen Linearlager (144) in der Wirk- oder z-Richtung (23), **dadurch gekennzeichnet, dass**
- eine Regelvorrichtung für den Antrieb des Magnetsystems (140) vorhanden ist, mit dem die Positionierung der Bearbeitungseinheit (142) in Wirk- oder z-Richtung (23) derart durchführbar ist, dass ein kraftgeregelter Fügevorgang der Bearbeitungseinheit (142) erfolgt, wobei
- als Bestandteil der Regelvorrichtung ein Kraftsensor (150) zur Messung der in Wirk- oder z-Richtung (23) wirkenden Kraft zwischen den in z-Richtung (23) gegenüberliegenden Oberflächen des Kraftsensors (150) vorhanden ist, wobei die eine Seite des Kraftsensors (150) mit dem Magnetsystem (140) und die andere Seite mit der Bearbeitungseinheit (142) gekoppelt ist, und dass
- ein Wegesensor (156) zur Messung des von der Bearbeitungseinheit (142) in Wirk- oder z-Richtung (23) im Verhältnis zur Basiseinheit (100) zurückgelegten Weges vorhanden ist.

2. Vorrichtung nach Anspruch 1, **dadurch gekennzeichnet, dass**
- zwischen der Krafteinleitung vom Magnetsystem (140) und dem Kraftsensor (150) eine mit einer vorgebbaren Vorspannung beaufschlagbare Federanordnung (151) angebracht ist.

3. Vorrichtung nach Anspruch 2, **dadurch gekennzeichnet, dass**
- zwischen der Federanordnung (151) und dem Kraftsensor (150) ein kraftabsorbierendes Zwischenstück (152) angeordnet ist.

4. Vorrichtung nach einem der vorhergehenden Ansprüche, **dadurch gekennzeichnet, dass**
- am Anschlag des Linearlagers (144) Dämpfer (146) angebracht sind.

5. Vorrichtung nach einem der vorhergehenden Ansprüche, **dadurch gekennzeichnet, dass**
- die Bearbeitungseinheit eine Greifereinheit (160) eines Handhabungsautomaten (10)ist.

6. Vorrichtung nach einem der vorhergehenden Ansprüche, **dadurch gekennzeichnet, dass**
- die Vibrationseinrichtungen Umkehrmagneten mit Paaren aus jeweils antivalent angesteuerten Einzelmagneten aufweisen, die mit Sinus-, Dreieck- Oder versetzten Sinusschwingungen beaufschlagbar sind.

7. Verfahren zum Betrieb einer Vorrichtung nach einem der vorhergehenden Ansprüche, **dadurch gekennzeichnet, dass**
- in einem ersten Arbeitsgang die Bearbeitungseinheit (142) in der x-y-Ebene in einem vorgegebenen Abstand über dem Bearbeitungsort positioniert wird und dabei mittels der Sensorsignale des Weg- und des Kraftsensors (150,156) die Regelvorrichtung das Magnetsystem (140) für den Antrieb in der z-Richtung (23) so steuert, dass das Gewicht der Bearbeitungseinheit (142) kompensiert wird, dass
- in einem zweiten Arbeitsgang, gesteuert durch den Wegsensor (156), in der z-Richtung (23) ein Aufsetzen der Bearbeitungseinheit (142) auf dem zu bearbeitenden Werkstück (20) mit einer vorgegebenen Kraft durchgeführt wird, und dass
- in einem dritten Arbeitsgang mit den Vibrationsvorrichtungen (162) in der x- und in der y-Richtung ein Such- und Bearbeitungsvorgang am Werkstück (20) vorgenommen wird.

8. Verfahren nach Anspruch 7, **dadurch gekennzeichnet, dass**
- der Suchvorgang zum Auffinden einer Ausnehmung (21) für ein zu fügendes Bauteil (18) am zu bearbeitenden Werkstück (20) mittels der Vibrationsvorrichtungen (162) und der Auswertung des Signals des Wegsensors (156) durchgeführt wird.

9. Verfahren nach Anspruch 7 oder 8, **dadurch gekennzeichnet, dass**
- der Bearbeitungsvorgang aus dem Fügen eines Bauteils (18) in eine gefundene Ausnehmung (21) besteht, wobei die Fügekräfte und der Fügeweg in z-Richtung (23) mittels des mit der Regelvorrichtung geregelten Magnetsystems (140) unter Auswertung der Signale des Weg- und des Kraftsensensors (150,156) erfolgt.

10. Verfahren nach Anspruch 8 oder 9, **dadurch gekennzeichnet, dass**
- für den Fall, dass zu hohe Füge- oder Bearbeitungskräfte am Bauteil (18) auftreten, die Bearbeitungseinheit (142) zunächst vom Werkstück (20) in z-Richtung (23) wegbewegt wird um den Bearbeitungsvorgang zu wiederholen und/oder dass
- mittels der Vibrationsvorrichtungen (162) eine oszillierende Schwingung in der x-, y-Ebene erzeugt wird, um den Bearbeitungsvorgang zu Ende zu führen.

## Claims

1. Device for the positioning of fitting or working units (142) for components (18), comprising
- vibrators (162) arranged at right angles to one another for positioning the working unit in the x and y directions, and comprising a magnet system (140) for positioning the working unit in the effective or z direction (23) along a linear bearing (144) held on a base unit (100), **characterized in that**
- there is a control device for the drive of the magnet system (140), with which control device the working unit (142) can be positioned in the effective or z direction (23) in such a way that a force-controlled fitting operation of the working unit (142) is effected, wherein
- as a component of the control device, there is a force sensor (150) for measuring the force acting in the effective or z direction (23) between the surfaces of the force sensor (150) opposite one another in the z direction (23), wherein the one side of the force sensor (150) is coupled to the magnet system (140) and the other side is coupled to the working unit (142), and **in that**
- there is a displacement sensor (156) for measuring the distance covered by the working unit (142) in the effective or z direction (23) in relation to the base unit (100).

2. Device according to Claim 1, **characterized in that**
- a spring arrangement (151) which can be subjected to predeterminable preloading is provided between the force introduction by the magnet system (140) and the force sensor (150).

3. Device according to Claim 2, **characterized in that**
- a force-absorbing intermediate piece (152) is arranged between the spring arrangement (151) and the force sensor (150).

4. Device according to one of the preceding claims, **characterized in that**
- dampers (146) are attached to the stop of the linear bearing (144).

5. Device according to one of the preceding claims, **characterized in that**
- the working unit is a gripping unit (160) of an automatic manipulator (10).

6. Device according to one of the preceding claims, **characterized in that**
- the vibrators have reversible magnets having pairs of individual magnets which are each activated non-equivalently and can be subjected to sinusoidal oscillations, triangular oscillations or offset sinusoidal oscillations.

7. Method of operating a device according to one of the preceding claims, **characterized in that**
- in a first processing step, the working unit (142) is positioned in the x-y plane at a predetermined distance above the working location and at the same time the control device of the magnet system (140) is controlled by means of the sensor signals from the displacement and the force sensor (150, 156) for the drive in the z direction (23) in such a way that the weight of the working unit (142) is compensated for, **in that**
- in a second processing step, controlled by the displacement sensor (156), the working unit (142) is placed on the workpiece (20) to be worked in the z direction (23) with a predetermined force, and **in that**
- in a third processing step, a search and working operation at the workpiece (20) is carried out in the x direction and in the y direction by means of the vibrators (162).

8. Method according to Claim 7, **characterized in that**
- the search operation for locating a recess (21) for a component (18) to be fitted at the workpiece (20) to be worked is carried out by means of the vibrators (162) and the evaluation of the signal from the displacement sensor (156).

9. Method according to Claim 7 or 8, **characterized in that**
- the working operation consists of the fitting of a component (18) into a located recess (21), the fitting forces and the fitting displacement in the z direction (23) being effected by means of the magnet system (140) controlled by the control device, while the signals from the displacement and the force sensor (150, 156) are evaluated.

10. Method according to Claim 8 or 9, **characterized in that**
- in the event of excessive fitting or working forces occurring at the component (18), the working unit (142) is first of all moved away from the workpiece (20) in the z direction (23) in order to repeat the working operation, and/or **in that**
- an oscillation is generated in the x-y plane by means of the vibrators (162) in order to bring the working operation to an end.

## Revendications

1. Dispositif pour le positionnement d'unités d'assemblage ou d'usinage (142) pour composants (18), comprenant :
- des dispositifs de vibration (162) disposés à angle droit l'un par rapport à l'autre pour le positionnement de l'unité d'usinage dans la direction x et la direction y, et comprenant un système magnétique (140) pour le positionnement de l'unité d'usinage le long d'un palier linéaire (144) maintenu sur l'unité de base (100) dans la direction d'action, ou direction z (23), **caractérisé en ce que**
- un dispositif de régulation est prévu pour l'entraînement du système magnétique (140), avec lequel le positionnement de l'unité d'usinage (142) dans la direction d'action ou direction z (23) peut être effectué de telle sorte qu'une opération d'assemblage de l'unité d'usinage (142) à régulation de force ait lieu,
- un capteur de force (150) pour la mesure de la force agissant dans la direction d'action ou direction z (23) étant prévu en tant que constituant du dispositif de régulation entre les surfaces opposées dans la direction z (23) du capteur de force (150), un côté du capteur de force (150) étant accouplé au système magnétique (140) et l'autre côté à l'unité d'usinage (142), et **en ce**
- **qu'**un capteur de position (156) est prévu pour la mesure de la distance parcourue par l'unité d'usinage (142) dans la direction d'action ou la direction z (23) par rapport à l'unité de base (100).

2. Dispositif selon la revendication 1, **caractérisé en ce qu'**entre l'introduction de la force du système magnétique (140) et du capteur de force (150), est monté un agencement de ressort (151) pouvant être sollicité par une précontrainte prédéfinissable.

3. Dispositif selon la revendication 2, **caractérisé en ce que**
- l'on dispose entre l'agencement de ressort (151) et le capteur de force (150) une pièce intermédiaire (152) absorbant les forces.

4. Dispositif selon l'une quelconque des revendications précédentes, **caractérisé en ce que**
- des amortisseurs (146) sont montés sur la butée du palier linéaire (144).

5. Dispositif selon l'une quelconque des revendications précédentes, **caractérisé en ce que**
- l'unité d'usinage est une unité de préhension (160) d'un robot de manipulation (10).

6. Dispositif selon l'une quelconque des revendications précédentes, **caractérisé en ce que**
- les dispositifs de vibration sont des aimants d'inversion avec des paires d'aimants individuels commandés à chaque fois en mode antivalent, qui peuvent être sollicités avec des oscillations sinusoïdales, triangulaires ou sinusoïdales décalées.

7. Procédé pour faire fonctionner un dispositif selon l'une quelconque des revendications précédentes, **caractérisé en ce que**
- dans une première étape de travail, l'unité d'usinage (142)est positionnée dans le plan x-y à une distance prédéfinie au-dessus du lieu d'usinage, et en l'occurrence, au moyen des signaux de capteur du capteur de position et de force (150, 156), le dispositif de régulation commande le système magnétique (140) pour l'entraînement dans la direction z (23) de telle sorte que le poids de l'unité d'usinage (142) soit compensé, **en ce que**
- dans une deuxième étape de travail, commandée par le capteur de position (156), on effectue dans la direction z (23) une mise en place de l'unité d'usinage (142) sur la pièce (20) à usiner avec une force prédéfinie, et **en ce que**
- dans une troisième étape de travail, on effectue avec les dispositifs de vibration (162) dans la direction x et la direction y une opération de recherche et d'usinage sur la pièce (20).

8. Procédé selon la revendication 7, **caractérisé en ce que**
- l'opération de recherche est effectuée pour trouver un évidement (21) pour un composant à assembler (18) sur la pièce à usiner (20) au moyen des dispositifs de vibration (162) et pour analyser le signal du capteur de position (156).

9. Procédé selon la revendication 7 ou 8, **caractérisé en ce que**
- l'opération d'usinage consiste à assembler un composant (18) dans un évidement trouvé (21), les forces d'assemblage et la trajectoire d'assemblage étant orientées dans la direction z (23) au moyen du système magnétique (140) régulé avec le dispositif de régulation en analysant les signaux du capteur de position et de force (150, 156).

10. Procédé selon la revendication 8 ou 9, **caractérisé en ce que**
- dans le cas où des forces d'assemblage ou d'usinage excessives se produisent sur le composant (18), l'unité d'usinage (142) est d'abord écartée de la pièce (20) dans la direction z (23), afin de répéter l'opération d'usinage, et/ou **en ce que**
- l'on produit au moyen des dispositifs de vibration (162) une vibration oscillante dans le plan x, y, afin de terminer l'opération d'usinage.
